# EUROPEAN PATENT SPECIFICATION

(11) **EP 1 141 613 B1**
(45) Date of publication and mention of the grant of the patent: **28.08.2002**
(21) Application number: 99966994.8
(22) Date of filing: 20.12.1999
(51) Int. Cl.: F16L 59/14, F16L 59/02

(54) **PRE-INSULATED PIPES AND PROCESS FOR THEIR PRODUCTION**
VORISOLIERTE ROHRE UND VERFAHREN ZU IHRER HERSTELLUNG
CONDUITES PREISOLEES ET LEUR PROCEDE DE PRODUCTION

(30) Priority: 28.12.1998 EP 98204452
(43) Date of publication of application: 10.10.2001
(73) Proprietor: SHELL INTERNATIONALE RESEARCH MAATSCHAPPIJ B.V., 2596 HR Den Haag (NL)
(72) Inventor: KELLNER, Juergen, Ottignies, 1348 Louvain-la-Neuve (BE); MORO, Franco, Ottignies, 1348 Louvain-la-Neuve (BE); MORTON, Patrick Robert André René, Ottignies, 1348 Louvain-la-Neuve (BE)
(74) Representative: Swinnen, Anne-Marie
(86) International application number: EP9910289
(87) International publication number: WO00039497

(56) References cited:
- GB-A- 2 283 188
- US-A- 4 307 756
- US-A- 4 640 312
- US-A- 5 534 299

## Description

The present invention relates to pre-insulated pipes and to a process for their production. More in particular, the present invention relates to pre-insulated pipes having a single one-piece insulating layer between the inner service pipe and the outer casing pipe and a process for their productions, see e.g. US-A-4640312.

Pre-insulated pipes are widely used, for instance in pipes for transporting hot fluids in industrial plants and in pipes used for transportation of hot water in district heating networks. Since the water to be transported via the district heating networks usually has temperatures of up to 130 °C with peaks up to 140 °C during the winter time, the insulated pipe and in particular the pipe insulation material must be able to withstand such high temperatures for a long time without any deterioration of insulating properties due to thermal stress forces. The same applies for transportation of hot oil or steam, where temperatures in excess of 150 °C are reached.

A commonly applied insulating material is rigid polyurethane foam. Such foam typically has a softening temperature of about 150-160 °C. It will be appreciated that if such rigid foam is exposed to temperatures of 140 °C or higher for prolonged periods of time, this will eventually affect the insulating properties of the foam.

Therefore, it was aimed at finding an insulating material which has a significantly higher softening temperature and hence has a higher thermal resistance and which also has excellent insulating properties. At the same time, however, this insulating material should be processable with the known techniques for producing pre-insulated pipes.

Known techniques for preparing pre-insulated pipes involve discontinuous and continuous pipe filling techniques. Such techniques are known in the art. Discontinuous pipe filling techniques include the pour rise technique, the top filling technique, the horizontal mid-point filling technique, the pour-pull technique and the lance withdrawal technique. The pour rise technique and the top filling technique are most frequently applied. In these techniques the pipe to be filled is placed in an angle to the horizontal and the polyurethane foaming mixture is injected into the cavity between inner pipe and outer casing at the bottom respectively at the top of the pipe, after which the foaming reaction occurs inside the cavity. Discontinuous pipe filling techniques require a foam formulation with very good flow properties, so that the entire cavity is filled with foam while at the same time achieving an even distribution of foam properties. Particularly this even distribution of foam properties is a problem frequently encountered.

Continuous pipe filling techniques include continuous spray techniques, continuous pour techniques and continuous moulding techniques. In continuous spray techniques the reacting foam mixture is sprayed on the outside of a rotating pipe. The foam has to react quickly so that the foam adheres well to the inner pipe surface and does not fall off. Various layers of foam may be applied from different spray heads to obtain the required insulation thickness. A casing pipe of high density polyethylene (HDPE) is normally applied around the insulating layer. The continuous pour technique is similar to the spray technique, except that the foaming mixture is not sprayed but poured onto a rotating pipe. The continuous moulding technique, finally, involves pouring a foaming mixture onto a film of material capable of bearing this mixture, said film being positioned directly under the inner service pipe. The pipe and the film are continuously fed into a circular moulding section. After the foaming mixture has been poured onto the film, the film is folded around the inner pipe before it enters the moulding section. The reacting foam mixture is expanding in the space between the film and the centred pipe. A major advantage of this technique is that hardly any foam overpack is applied. At the end of the moulding section the mechanical strength of the foam should be sufficiently high. The pre-insulated pipe composite thus obtained is subsequently provided with an outer casing, for instance by feeding it into an extrusion section where a casing of an extrudable thermoplastic material, e.g. HDPE, is extruded around it or by winding a band of a thermoplastic material around the pipe composite at elevated temperature, followed by cooling. In the continuous pipe insulation techniques the pipes can be cut at any desired length. Flow properties of the foaming mixtures applied do not need to be as good as in discontinuous pipe filling techniques, as the mixtures need to flow only around and not along the inner pipe. In discontinuous pipe filling techniques, on the other hand, the foaming mixtures do need to flow both around and along the inner pipe. Advantages of continuous pipe insulation techniques are the high production rate and the even distribution of insulating properties. Furthermore, cost savings can be attained by a reduced foam filling density and a thinner outer casing. The thickness of the outer casing pipe can be significantly reduced, as this casing is only applied after the foam expansion has occurred, so that it does not have to withstand the high pressure resulting from said foam expansion. Particularly for larger pipe diameters this can result in substantial cost savings.

Rigid polyisocyanurate-modified polyurethane foams (PIR/PUR foams) are known to have high softening temperatures, a very good thermal resistance and excellent flame retardancy properties. The insulating properties of PIR/PUR foams are similar to those of rigid polyurethane foams. However, the flow properties of the PIR/PUR precursor foaming mixture are very poor. This implies that their use in applications requiring at least some flow properties, such as in the production of pre-insulated pipes, which have a single insulating layer and which are produced in a single filling step, where a foaming mixture has to flow around an inner pipe before it expands into the final foam, has never been considered. Furthermore, in discontinuous pipe filling techniques the foaming mixture also has to flow along the inner pipe requiring even better flow properties. Consequently, up to now it was generally accepted that PIR/PUR foams could not be used to produce factory-made pre-insulated pipes having a single, one-piece insulating layer of PIR/PUR foam by a method involving a single filling step.

It has now been surprisingly found that it is possible to produce such pre-insulated pipes. More specifically, it has been found that a pre-insulated pipe having a single, one-piece insulating layer of PIR/PUR foam can be produced in a continuous process involving a single pipe filling step, such as in a continuous moulding process or in a process involving spraying or pouring a specific foaming mixture onto a rotating pipe. Accordingly, the present invention relates to a pre-insulated pipe comprising an inner pipe surrounded by a casing with arranged thereinbetween a single one-piece layer of insulation material comprising a polyisocyanurate-modified polyurethane foam.

In US-4,307,756 a thermally insulated pipe is disclosed comprising a metal inner tube, a metal foil or ribbon formed into an outer tube, spacer means on the inner tube to support the outer tube and to leave space between inner and outer tube, an isocyanurate-modified polyurethane foam inside said space and a synthetic flame resistant envelope on the metal foil tube. The pre-insulated pipe according to the present invention does not contain any spacer means between inner pipe and casing: there is only a polyisocyanurate-modified polyurethane foam insulating layer between said inner pipe and casing, which insulating layer consists of one single one-piece foam. Accordingly, contrary to the pipe disclosed in US 4,307,756 the pre-insulated pipe according to the present invention has one uniform insulating layer without any interruption in its structure.

The single one-piece layer of polyisocyanurate-modified polyurethane foam is obtained by foaming a mixture comprising
(a) a suitable polyol component,
(b) a suitable polyisocyanate component in such amount that the isocyanate index is at least 150,
(c) at least one polyisocyanurate catalyst and optionally one or more polyurethane catalysts, and
(d) suitable ancillary chemicals.

The polyol component may be any polyether polyol or polyester polyol known to be applicable in rigid polyurethane foams and in PIR/PUR foams. The term "polyether polyol" as used in this connection refers to polyols comprising poly(alkylene oxide) chains, which polyols are normally obtained by reacting a polyhydroxy -or polyamine initiator compound with at least one alkylene oxide and optionally other compounds. The term "polyester polyol" refers to polyols comprising ester bondings in the polymer chain. One way of preparing such polyols is, for instance, reacting a polycarboxylic acid or carboxylic acid anhydride with a polyhydroxy compound. The term "molecular weight" as used throughout this specification refers to number average molecular weight.

Suitable polyester polyols include difunctional aromatic polyester polyols. One category of such polyester polyols typically used are the polyester polyols produced from phthalic anhydride and diethylene glycol. Another category uses either the heavy residue of the production of dimethyl terephthalate or scraps of recycled polyethylene terephthalate (PET) as the feedstock.

Suitable polyether polyols typically have a functionality of from 2 to 8, suitably from 3 to 6, a molecular weight of up to 3000, suitably up to 2000 and more suitably from 250 to 1000, and a hydroxyl value of at least 120 mg KOH/g, suitably at least 200 mg KOH/g and more suitably from 300 to 600 mg KOH/g. Such polyether polyols are well known in the art and typically are alkylene oxide adducts of initiators, such as sucrose, sorbitol, pentaerythritol, glycerol, bisphenol A and blends of two or more of these. The alkylene oxides most frequently used are propylene oxide and ethylene oxide. The polyol component (a) may also consist of a blend of two or more of the aforementioned rigid polyols whereby the average functionality, hydroxyl value and molecular weight are in the ranges specified above.

The polyisocyanate component (b), may be any polyisocyanate known to be suitable in rigid polyurethane foams. Suitably, aromatic polyisocyanates are used and any di-, tri-, tetra- and higher functional aromatic polyisocyanate may be used. In EP-A-0, 778, 302, for instance, a list with suitable polyisocyanates is given. Preferred polyisocyanates are 2,4- and 2,6-toluene diisocyanate as well as mixtures thereof; 4,4'-diphenylmethane diisocyanate (MDI); polymethylene polyphenylene polyisocyanate and polymeric MDI, a mixture of polyisocyanates with MDI as the main component.

The polyisocyanate is used in such quantity that the isocyanate index is at least 150, preferably from 150 to 600, more preferably from 200 to 500 and most preferably from 250 to 450. As is well known in the art, the isocyanate index is defined as 100 times the equivalence ratio of isocyanate groups to active hydrogen atoms, such as those present in the polyol component (a) and water. The polyisocyanate should be used in excess to the polyol and water in order to allow the formation of isocyanurate structures.

The presence of one or more isocyanurate (or trimerisation) catalysts is essential. Suitable polyisocyanurate catalysts are well known in the art and include sodium acetate, potassium octoate or potassium acetate, e.g. dissolved in diethylene glycol, and strong basic materials, such as quaternary ammonium salts and tris(dimethylaminopropyl) triazine. The polyurethane catalyst, which may optionally be employed as (part of) component (c), can be any polyurethane catalyst known to be suitable in urethane production. Suitable catalysts are those described in e.g. EP-A-0,358,282 and US-A-5,011,908 and include tertiary amines, salts of carboxylic acids and organometallic catalysts. Examples of suitable tertiary amines are triethylene diamine, N,N-dimethyl cyclohexyl amine, N-methyl morpholine, diethyl ethanol amine, diethanol amine, dimethyl benzyl amine and dimethyl cyclohexyl amine. Suitable organometallic catalysts include stannous octoate, stannous oleate, stannous acetate, stannous laureate, lead octoate, nickel naphthenate and dibutyltin dichloride. Further examples of organometallic catalysts are described in US-A-2,846,408. Of course, mixtures of two or more of the aforementioned catalysts may also be used.

The amounts of polyisocyanurate catalyst and polyurethane catalyst, if at all present, will usually be in the range of from 1.0 to 8.0 parts by weight (pbw), more suitably 2.0 to 5.0 pbw, per 100 pbw of polyol component.

Suitable blowing agents (part of component (d)) are those conventionally applied in rigid polyurethane production and include water, partly halogenated alkanes, aliphatic alkanes and alicyclic alkanes. Fully halogenated hydrocarbons may also be used, but are less preferred due to their ozone depleting effect. Concrete examples of suitable blowing agents then include water, 1-chloro-1,1-difluoroethane, cyclopentane, cyclohexane, n-pentane, isopentane and mixtures of two or more of these. A combination of water on the one hand and n-pentane or cyclopentane on the other hand has been found particularly useful. The amount of blowing agent used may range from 0.1 to 10 pbw per 100 pbw of polyol for water and 0.1 to 40 pbw per 100 pbw of polyol in case of partly halogenated hydrocarbons, aliphatic alkanes and alicyclic alkanes. Furthermore, low boiling blowing agents which give a frothing effect can also be used. Examples of such blowing agents include liquid carbon dioxide, HFC-134a (1,1,1,2-tetrafluoroethane) and HFC-152a (1,1-difluoroethane).

The auxiliaries, which in addition to the blowing agent form component (d), are those normally applied and may include foam stabilisers, flame retardants, colouring agents and fillers. For instance, organosilicone surfactants are often used as foam stabilisers.

The casing of the pre-insulated pipe according to the invention may be of any material known to be useful for this purpose. Materials frequently applied and preferred for the purpose of the present invention are high density polyethene (HDPE), low density polyethene (LDPE), linear low density polyethene (LLDPE) and steel.

The pre-insulated pipe according to the invention in principle may have any desired length and diameter depending on the application for which it is intended. Because the pre-insulated pipe can be produced by a continuous process its length can be varied over a wide range. For the purpose of the present invention it has been found particularly suitable that the pre-insulated pipes have a length of at least 3 metres, preferably from 4 to 25 metres and more preferably from 6 to 16 metres. Its outer diameter may suitable range from 10 cm to 1.5 metres. When prepared by a continuous moulding process, the outer diameter will normally range from 10 to 25 cm. Larger diameters (up to 50 cm) may, however, be attained when two or more foam dispense units (i.e. mixing heads) are applied. Techniques involving spraying the foaming mixture onto a rotating pipe are more appropriate for larger diameter pipes (up to 1 meter), whereas techniques involving pouring the foaming mixture onto a rotating pipe can also be used for smaller diameters like those achievable in continuous moulding techniques.

The present invention also relates to a process for the continuous production of pre-insulated pipes as described herein before, wherein a foaming mixture comprising
(a) a suitable polyol component,
(b) a suitable polyisocyanate component in such amount that the isocyanate index is at least 150,
(c) at least one polyisocyanurate catalyst and optionally one or more polyurethane catalysts, and
(d) suitable ancillary chemicals, is continuously brought into contact with the outer surface of an inner pipe and is allowed to expand into a polyisocyanurate-modified polyurethane foam, after which a casing is applied around this a polyisocyanurate-modified polyurethane foam. Bringing the foaming mixture into contact with the outer surface of an inner pipe may take place either by applying the foaming mixture directly onto the outer surface of the inner pipe or by first applying the foaming mixture onto a film positioned under the inner pipe and subsequently folding this film around said inner pipe, thereby bringing the foaming mixture into contact with the outer surface of the inner pipe.

The above process may involve continuous spray techniques, continuous pour techniques and continuous moulding techniques. For the purpose of the present invention it has, however, been found particularly advantageous to apply a continuous moulding technique.

Accordingly, the present invention also relates to a process as described above, wherein a pre-insulated pipe having a single one-piece layer of insulation material comprising a polyisocyanurate-modified polyurethane foam as described herein before is prepared by the steps of
(a) continuously pouring a foaming mixture onto a film, which is positioned under the inner pipe and which is capable of carrying the foaming mixture and is substantially inert towards this foaming mixture, said foaming mixture comprising
   (1) a suitable polyol component,
   (2) a suitable polyisocyanate component in such amount that the isocyanate index is at least 150,
   (3) at least one polyisocyanurate catalyst and one or more polyurethane catalysts, and
   (4) suitable ancillary chemicals,
(b) continuously feeding the inner pipe and the film carrying the foaming mixture into a moulding section, while folding the film around the inner pipe,
(c) allowing the foaming mixture to react and to expand in the space between the inner pipe and the film inside the moulding section, thus resulting in a pipe composite leaving the moulding section,
(d) applying a casing around the pipe composite,
(e) cooling the pipe composite to yield the pre-insulated pipe, and
(f) cutting the pre-insulated pipes at the desired length.

The film onto which the foaming mixture is poured, should be sufficiently strong to carry this mixture. Suitable film materials include for instance polyethene or polypropene films, of which polyethene films are preferred. Particularly Corona treated polyethene films have been proven to be suitable for this purpose.

In step (b) of the above process the inner pipe and the film are suitably guided to stay at substantially equal distance, while being fed into the moulding section. Before entry into the moulding section the film is also suitably folded into a cylindrical shape around the inner pipe.

In step (c) the PIR/PUR insulating layer is formed in the desired circular shape. The result is a pipe composite containing the inner pipe surrounded by the insulating layer of PIR/PUR foam and with the film as outer layer.

In step (d) a casing is applied around the pipe composite obtained from step (c). Applying the casing around the pipe composite takes place at elevated temperature, i.e. at a temperature which is sufficiently high to allow a proper processing of the casing material and to ensure a proper adhesion of the casing to the insulating layer. Step (d) may, for instance, involve, passing the pipe composite obtained in step (c) through an extrusion zone, wherein a casing of a suitable thermoplastic material is extruded around the pipe composite. Alternatively, the outer casing is applied by winding a band of a thermoplastic material at elevated temperature around the pipe composite obtained after step (c). The thermoplastic material to be used suitably is HDPE, while other suitable materials include LDPE and LLDPE.

Yet another alternative for step (d) is applying a steel casing around the pipe composite obtained after step (c). A suitable way of achieving this is by using a steel foil positioned under the film onto which the foaming mixture is poured in step (a). The steel foil is arranged such that upon folding of the film and steel foil around the inner pipe in step (b) the steel foil forms the outer layer, after which foam expansion occurs in step (c) and the steel foil is welded and optionally corrugated in step (d). In this way a steel casing can be obtained in a continuous moulding process.

The result of the process as described above, after cooling in step (e) and cutting in step (f), is a pre-insulated pipe with an insulating layer of PIR/PUR foam. The process is particularly suitable to be applied on a commercial scale to produce factory-made, pre-insulated pipes.

The invention is further illustrated by the following examples without limiting the scope of the invention to these particular embodiments.

### Examples 1-3

Foaming mixtures having compositions as indicated in Table 1 were poured onto a Corona treated polyethene film in a continuous moulding device consisting of a circular moulding section, a cooling section and a cutting section.

The ingredients used were:
Polyol A: an aliphatic, propylene oxide-based rigid polyol having an OH value of 380 mg KOH/g, a molecular weight of approximately 640 and a functionality of 4.25.
Polyol B: an aromatic, propylene oxide-based rigid polyol having an OH value of 510 mg KOH/g, a molecular weight of about 470 and a functionality of 4.25.
Polyol C: an aliphatic, propylene oxide based polyol having an OH value of 450 mg KOH/g, a molecular weight of about 620 and a functionality of 4.9.
STEPANPOL PS2352: a polyester polyol ex Stepan based on phthalic anhydride and diethylene glycol having an OH value of 235 mg KOH/g and a functionality of 2.0 (STEPANPOL is a trademark).
CARADATE 30: polymeric MDI ex Shell (CARADATE is a trademark).
DABCO DC193: a silicone surfactant ex Air Products (DABCO is a trademark).
JEFFCAT TR: trimerisation catalyst ex Huntsman (JEFFCAT is a trademark).
DMCHA: N,N-dimethylcyclohexylamine (urethane catalyst).
HCFC 141b: 1,1-dichloro-1-fluoroethane (blowing agent).

In each example the foaming mixture was continuously poured onto the transparent film by means of a mixing head, the film being positioned under the inner pipe. The inner pipe was made of steel. Inner pipe and film were continuously fed into the moulding section, while folding the film carrying the foaming mixture around the inner pipe. The foaming mixture was allowed to react and to expand in the space between the inner pipe and the film inside the moulding section. The resulting pipe composite leaving the moulding section was subsequently cooled and cut at a length of 3 metres in respectively the cooling section and cutting section. No outer casing was applied, so that the insulating layer of PIR/PUR foam formed could also be visually inspected for defects.

The properties of the PIR/PUR foam insulating layers produced in any of the Examples 1, 2 and 3 are indicated in Table 1 (under respectively Ex 1, Ex 2 and Ex 3). All ingredients are indicated in parts by weight.

### Comparative Examples 1 and 2

Example 1 was repeated except that a different foaming formulation was used wherein the isocyanate index was only 135 (CEx 1) or that no polyisocyanurate catalyst was used (CEx 2).

The properties of the insulating layer thus obtained are indicated in Table 1. All ingredients are indicated in parts by weight.

**Table 1**

| PIR/PUR insulating layers and properties | | | | | |
|---|---|---|---|---|---|
| Ingredients/Properties | Ex 1 | Ex 2 | Ex 3 | CEx 1 | CEx 2 |
| Polyol A | 50 | 50 | - | - | 50 |
| Polyol B | 50 | 50 | - | 50 | 50 |
| Polyol C | - | - | - | 46.5 | - |
| STEPANPOL PS2352 | - | - | 100 | - | - |
| Glycerol | - | - | - | 3.5 | - |
| DC 193 | 2 | 2 | 2 | - | 2 |
| water | - | 0.5 | 0.5 | - | - |
| potassium octoate* | 3.5 | - | - | 1 | - |
| JEFFCAT TR | - | 6 | 5 | - | - |
| DMCHA | 1.5 | - | - | 1.5 | 1.5 |
| HCFC 141b | 31 | 21 | 21 | - | 31 |
| pentane | - | - | - | 7 | - |
| CARADATE 30 | 318 | 283 | 283 | 200 | 371 |
| Isocyanate index | 350 | 250 | 445 | 135 | 350 |
| softening temperature (°C) | | | | | |
| initial | 234 | 222 | 259 | 137 | *** |
| postcure 24h/150 °C | 241 | 238 | 264 | 169 | |
| Maximum flame height (cm)** | 7 | n.m. | n.m. | burns | *** |
| Cell structure | fine | fine | fine | fine | *** |
| compressive strength (kPa) | 600 | n.m. | n.m. | 430 | *** |

| | | | | | |
|---|---|---|---|---|---|
| * potassium octoate is a trimerisation catalyst. | | | | | |
| ** according to DIN4102 B2 small scale fire test: 15.0 cm or less means that the foam has passed the test. | | | | | |
| *** no foam was formed. | | | | | |

## Claims

1. Pre-insulated pipe comprising an inner pipe surrounded by a casing with arranged thereinbetween a single one-piece layer of insulation material comprising a polyisocyanurate-modified polyurethane foam.

2. Pre-insulated pipe according to claim 1, wherein the polyisocyanurate-modified polyurethane foam is obtained by foaming a mixture comprising
(a) a suitable polyol component,
(b) a suitable polyisocyanate component in such amount that the isocyanate index is at least 150,
(c) at least one polyisocyanurate catalyst and optionally one or more polyurethane catalysts, and
(d) suitable ancillary chemicals.

3. Pre-insulated pipe according to claim 2, wherein the polyisocyanate component is added in such amount that the isocyanate index has a value in the range of from 200 to 500.

4. Pre-insulated pipe according to any one of claims 1-3, wherein the casing comprises high density polyethene or steel.

5. Process for the continuous production of pre-insulated pipes as claimed in any one of claims 1-4, wherein a foaming mixture comprising
(a) a suitable polyol component,
(b) a suitable polyisocyanate component in such amount that the isocyanate index is at least 150,
(c) at least one polyisocyanurate catalyst and optionally one or more polyurethane catalysts, and
(d) suitable ancillary chemicals,
is continuously brought into contact with the outer surface of an inner pipe and is allowed to expand into a polyisocyanurate-modified polyurethane foam, after which a casing is applied around this a polyisocyanurate-modified polyurethane foam.

6. Process according to claim 5 comprising the steps of
(a) continuously pouring a foaming mixture onto the film, which is positioned under the inner pipe and which is capable of carrying the foaming mixture and is substantially inert towards this foaming mixture, said foaming mixture comprising
(1) a suitable polyol component,
(2) a suitable polyisocyanate component in such amount that the isocyanate index is at least 150,
(3) at least one polyisocyanurate catalyst and optionally one or more polyurethane catalysts, and
(4) suitable ancillary chemicals,
(b) continuously feeding the inner pipe and the film carrying the foaming mixture into a moulding section, while folding the film around the inner pipe,
(c) allowing the foaming mixture to react and to expand in the space between the inner pipe and the film inside the moulding section, thus resulting in a pipe composite leaving the moulding section,
(d) applying a casing around the pipe composite,
(e) cooling the pipe composite to yield the pre-insulated pipe, and
(f) cutting the pre-insulated pipes at the desired length.

7. Process according to claim 6, wherein the film is made of polyethene.

8. Process according to claim 6 or 7, wherein step (d) involves passing the pipe composite through an extrusion zone, wherein a casing of a suitable thermoplastic material is extruded around the pipe composite.

9. Process according to claim 8, wherein the thermoplastic material is high density polyethene.

10. Process according to claim 6 or 7, wherein a steel foil is used together with the film, which steel foil is arranged such that upon folding of the film and steel foil around the inner pipe in step (b) the steel foil forms the outer layer, and wherein the steel foil is welded and optionally corrugated in step (d).

## Patentansprüche

1. Vorisoliertes Rohr, umfassend ein inneres Rohr, umgeben von einer Umhüllung mit einer dazwischen angeordneten einzelnen einteiligen Schicht eines Isolationsmaterials, welches einen Polyisocyanurat-modifizierten Polyurethanschaumstoff umfasst.

2. Vorisoliertes Rohr nach Anspruch 1, wobei der Polyisocyanurat-modifizierte Polyurethanschaumstoff durch Aufschäumen einer Mischung erhalten wird, umfassend
(a) einen geeigneten Polyolbestandteil,
(b) einen geeigneten Polyisocyanatbestandteil in einer derartigen Menge, dass der Isocyanatindex wenigstens 150 ist,
(c) wenigstens einen Polyisocyanuratkatalysator und wahlweise einen oder mehrere Polyurethankatalysatoren und
(d) geeignete Hilfs-Chemikalien.

3. Vorisoliertes Rohr nach Anspruch 2, wobei der Polyisocyanatbestandteil in einer derartigen Menge zugesetzt wird, dass der Isocyanatindex einen Wert im Bereich von 200 bis 500 hat.

4. Vorisoliertes Rohr nach einem der Ansprüche 1 bis 3, wobei die Umhüllung Niederdruckpolyethen oder Stahl umfasst.

5. Verfahren für die kontinuierliche Herstellung vorisolierter Rohre, wie in einem der Ansprüche 1 bis 4 beansprucht, wobei eine Schaumstoffmischung, umfassend:
(a) einen geeigneten Polyolbestandteil,
(b) einen geeigneten Polyisocyanatbestandteil in einer derartigen Menge, dass der Isocyanatindex wenigstens 150 ist,
(c) wenigstens einen Polyisocyanuratkatalysator und wahlweise einen oder mehrere Polyurethankatalysatoren und
(d) geeignete Hilfs-Chemikalien,
kontinuierlich mit der äußeren Oberfläche eines inneren Rohres in Kontakt gebracht wird und ihm ermöglicht wird, sich zu einem Polyisocyanurat-modifizierten Schaumstoff auszudehnen, wonach eine Umhüllung um diesen Polyisocyanurat-modifizierten Polyurethanschaumstoff angebracht wird.

6. Verfahren nach Anspruch 5, umfassend die Schritte von
(a) kontinuierlichem Gießen einer Schaumstoffmischung auf den Film, welcher unter dem inneren Rohr angebracht ist, und welcher die Schaumstoffmischung tragen kann und im Wesentlichen in Bezug auf diese Mischung inert ist, wobei diese Schaumstoffmischung umfasst:
(1) einen geeigneten Polyolbestandteil,
(2) einen geeigneten Polyisocyanatbestandteil in einer derartigen Menge, dass der Isocyanatindex wenigstens 150 ist,
(3) wenigstens einen Polyisocyanuratkatalysator und wahlweise einen oder mehrere Polyurethankatalysatoren und
(4) geeignete zusätzliche Chemikalien,
(b) kontinuierliches Einführen des inneren Rohres und des Films, welcher die Schaumstoffmischung trägt, in einen Formabschnitt, während der Film um das innere Rohr gefaltet wird,
(c) Abreagieren der Schaumstoffmischung und sich in einen Raum zwischen dem inneren Rohr und dem Film innerhalb des Formabschnitts auszudehnen, folglich in einem Rohrverbundstoff resultierend, welcher den Formabschnitt verlässt,
(d) Anbringen einer Umhüllung um den Rohrverbundstoff,
(e) Kühlen des Rohrverbundstoffes um das vorisolierte Rohr zu erhalten und
(f) Schneiden der vorisolierten Rohre in die gewünschte Länge.

7. Verfahren nach Anspruch 6, wobei der Film aus Polyethen hergestellt ist.

8. Verfahren nach Anspruch 6 oder 7, wobei Schritt (d) das Durchführen des Rohrverbundstoffs durch eine Presszone einschließt, wobei eine Umhüllung eines geeigneten thermoplastischen Materials um den Rohrverbundstoffs extrudiert wird.

9. Verfahren nach Anspruch 8, wobei das thermoplastische Material Niederdruckpolyethen ist.

10. Verfahren nach Anspruch 6 oder 7, wobei eine Stahlfolie zusammen mit dem Film verwendet wird, wobei diese Stahlfolie derartig angeordnet ist, dass die Stahlfolie während des Faltens des Films und der Stahlfolie um das innere Rohr in Schritt (b) die äußere Schicht bildet, und wobei die Stahlfolie in Schritt (d) verschweißt und wahlweise gewellt wird.

## Revendications

1. Tube pré-isolé, comprenant un tube interne entouré d'une chemise, avec entre eux une couche monobloc unique d'un matériau isolant comprenant une mousse de polyuréthanne modifiée par un polyisocyanate.

2. Tube pré-isolé selon la revendication 1, dans lequel la mousse de polyuréthanne modifiée par un polyisocyanate est obtenue par expansion d'un mélange comprenant
(a) un composant polyol approprié,
(b) un composant polyisocyanate approprié, en une quantité telle que l'indice d'isocyanate soit d'au moins 150,
(c) au moins un catalyseur de type polyisocyanurate, et éventuellement un ou plusieurs catalyseurs de type polyuréthanne, et
(d) des composés chimiques accessoires appropriés.

3. Tube pré-isolé selon la revendication 2, dans lequel le composant polyisocyanate est ajouté en une quantité telle que l'indice d'isocyanate ait une valeur comprise dans la plage de 200 à 500.

4. Tube pré-isolé selon l'une quelconque des revendications 1 à 3, dans lequel la chemise est constituée d'un polyéthylène haute densité ou d'acier.

5. Procédé de production continue de tube pré-isolé selon l'une quelconque des revendications 1 à 4, dans lequel on met en continu un mélange d'expansion, comprenant
(a) un composant polyol approprié,
(b) un composant polyisocyanate approprié, en une quantité telle que l'indice d'isocyanate soit d'au moins 150,
(c) au moins un catalyseur de type polyisocyanurate, et éventuellement un ou plusieurs catalyseurs de type polyuréthanne, et
(d) des composés chimiques accessoires appropriés,
en contact avec la surface extérieure d'un tube intérieur, et on le laisse s'expanser pour donner une mousse de polyuréthanne modifiée par un polyisocyanurate, ce après quoi on applique une chemise autour de cette mousse de polyuréthanne modifiée par un polyisocyanurate.

6. Procédé selon la revendication 5, comprenant les étapes consistant
(a) à verser en continu un mélange d'expansion sur le film, qui est disposé en dessous du tuyau intérieur et qui est capable de porter le mélange d'expansion et est essentiellement inerte vis-à-vis de ce mélange d'expansion, ledit mélange d'expansion comprenant
(1) un composant polyol approprié,
(2) un composant polyisocyanate approprié, en une quantité telle que l'indice d'isocyanate soit d'au moins 150,
(3) au moins un catalyseur de type polyisocyanurate, et éventuellement un ou plusieurs catalyseurs de type polyuréthanne, et
(4) des composés chimiques accessoires appropriés,
(b) à introduire en continu le tuyau intérieur et le film portant le mélange d'expansion dans une section de moulage, tout en repliant le film autour du tube intérieur,
(c) à permettre au mélange d'expansion de réagir et de s'expanser dans l'espace situé entre le tube intérieur et le film à l'intérieur de la section de moulage, ce qui va donner un composite formant tube sortant de la section de moulage,
(d) à appliquer une chemise autour du composite formant tube,
(e) à refroidir le composite formant tube pour obtenir le tube pré-isolé, et
(f) à couper à la longueur voulue les tubes pré-isolés.

7. Procédé selon la revendication 6, dans lequel le film est constitué de polyéthylène.

8. Procédé selon la revendication 6 ou 7, dans lequel l'étape (d) consiste à faire passer le composite formant tube dans une zone d'extrusion, dans laquelle une chemise en un matériau thermoplastique approprié est extrudée autour du composite formant tube.

9. Procédé selon la revendication 8, dans lequel le matériau thermoplastique est un polyéthylène haute densité.

10. Procédé selon la revendication 6 ou 7, dans lequel on utilise une feuille d'acier en même temps que le film, laquelle feuille d'acier est disposée de façon que, après repliement du film et de la feuille d'acier autour du tube intérieur dans l'étape (b), la feuille d'acier forme la couche extérieure, la feuille d'acier étant soudée et éventuellement ondulée dans l'étape (d).
